# EUROPÄISCHE PATENTSCHRIFT

(11) **EP 4 074 947 B1**
(45) Veröffentlichungstag und Bekanntmachung des Hinweises auf die Patenterteilung: **06.12.2023**
(21) Anmeldenummer: 22162375.4
(22) Anmeldetag: 16.03.2022
(51) Int. Cl.: F01N 3/20, F01N 3/027, F01N 13/18

(54) **HEIZLEITER FÜR EINE ABGASHEIZANORDNUNG**
HEATING CONDUCTOR FOR AN EXHAUST GAS HEATING SYSTEM
CONDUCTEUR DE CHAUFFAGE POUR UN AGENCEMENT DE CHAUFFAGE PAR GAZ D'ÉCHAPPEMENT

(30) Priorität: 16.04.2021 DE 102021109567
(43) Veröffentlichungstag der Anmeldung: 19.10.2022
(73) Patentinhaber: Purem GmbH, 66539 Neunkirchen (DE)
(72) Erfinder: Uysal, Fatih, Plochingen (DE); Kurpejovic, Enver, Kirchheim unter Teck (DE); Tüber, Klaus, Esslingen (DE); Höckel, Sandra, Esslingen am Neckar (DE)
(74) Vertreter: Ruttensperger Lachnit Trossin Gomoll

(56) Entgegenhaltungen:
- EP-A1- 0 608 783
- EP-A1- 1 484 484
- EP-A1- 3 964 696
- WO-A1-2014/086440
- US-A- 4 723 973

## Beschreibung

Die vorliegende Erfindung betrifft einen Heizleiter für eine Abgasheizanordnung für eine Abgasanlage für eine Brennkraftmaschine.

Eine Abgasheizanordnung mit einem durch Heraustrennen aus einem Metall-Flachmaterial gebildeten Heizleiter ist aus der nachveröffentlichten deutschen Patentanmeldung DE 10 2020 123 376 bekannt. Durch das Bereitstellen des zwischen zwei Trägerelementen getragenen Heizleiters durch Heraustrennen aus einem Metall-Flachmaterial, beispielsweise durch Ausschneiden oder Ausstanzen eines derartigen Heizleiters aus einem plattenartigen Rohling des Metall-Flachmaterials, wird es möglich, einen derartigen Heizleiter mit nahezu beliebigem, vergleichsweise komplexem Verlauf und insbesondere auch variierender Querschnittsfläche und somit auch lokal variierendem Widerstand verschiedener Heizleiterabschnitte bereitzustellen und diesen somit an die in einem Abgasführungsgehäuse einer Abgasanlage vorhandenen Strömungsverhältnisse anzupassen.

Ein Heizleiter für eine Abgasheizanordnung gemäß dem Oberbegriff des Anspruchs 1 ist aus der WO 2014/086440 A1 bekannt. Diese Heizleiter ist plattenartig durch Heraustrennen aus einem Metall-Flachmaterial mit einer mäanderartig gewundenen Struktur mit einer Vielzahl von aneinander anschließenden und jeweils in einer Heizleiterabschnitt-Längsrichtung langgestreckten Heizleiterabschnitten ausgebildet. Auch aus der US 4 723 973 A ist eine derartige Anordnung bekannt.

Es ist die Aufgabe der vorliegenden Erfindung, einen Heizleiter für eine Abgasheizanordnung für eine Abgasanlage einer Brennkraftmaschine vorzusehen, welcher eine erhöhte Effizienz bei der Übertragung von Wärme auf diesen durchströmendes Abgas aufweist.

Erfindungsgemäß wird diese Aufgabe gelöst durch einen Heizleiter für eine Abgasheizanordnung für eine Abgasanlage für eine Brennkraftmaschine gemäß Anspruch 1, umfassend eine Mehrzahl von Heizleiterabschnitten, wobei in wenigstens einem Heizleiterabschnitt, vorzugsweise in mehreren oder jedem Heizleiterabschnitt, wenigstens eine, vorzugsweise mehrere von Abgas durchströmbare Durchströmöffnungen vorgesehen sind.

Durch das Bereitstellen einer oder mehrerer Durchströmöffnungen in wenigstens einem Teil der Heizleiterabschnitte des Heizleiters, also in wenigstens einem der Heizleiterabschnitte des Heizleiters, wird ein wesentlicher Einfluss auf die Strömungsverhältnisse in einer Abgasanlage erreicht. Aufgrund der Durchströmöffnungen ist der durch einen derartigen Heizleiter erzeugte Gegendruck beim Durchströmen mit Abgas geringer, als bei einem näherungsweise gleich dimensionierten Heizleiter ohne Durchströmöffnungen. Der Heizleiter selbst ist besser und, auch abhängig von der Geometrie derartiger Durchströmöffnungen, in einem größeren Oberflächenbereich von Abgas umströmbar, so dass eine verstärkte Wärmeübertragung auf den Heizleiter umströmendes Abgas erreicht werden kann. Da im Heizbetrieb der Heizleiter von elektrischem Strom durchflossen wird und im Bereich einer jeweiligen Durchströmöffnung beidseits einer derartigen Durchströmöffnung Stromflusspfade mit einem von deren Querschnittsgeometrie abhängigen elektrischen Widerstand gebildet sind, kann durch eine lokale Beeinflussung bzw. Vorgabe des Stromflusses das Wärmeübertragungsverhalten an jeweilige Strömungsverhältnisse in einer Abgasanlage einer Brennkraftmaschine angepasst bereitgestellt werden.

Eine für eine effiziente Wärmeübertragung vorteilhafte große Länge des stromdurchflossenen Heizleiters wird dadurch erreicht, dass wenigstens ein Teil der Heizleiterabschnitte zum Bereitstellen einer windungsartig sich erstreckenden Struktur des Heizleiters aneinander anschließend angeordnet ist.

Hierzu ist erfindungsgemäß vorgesehen, dass wenigstens ein Teil der Heizleiterabschnitte eine wenigstens bereichsweise mäanderartig gewundene Struktur des Heizleiters bildet. Die einzelnen zusammen die mäanderartige Struktur bildenden Heizleiterabschnitte können für sich jeweils im Wesentlichen geradlinig sich erstreckend oder gekrümmt ausgebildet sein.

Alternativ oder zusätzlich bildet für eine vergleichsweise große Länge des Heizleiters wenigstens ein Teil der Heizleiterabschnitte eine wenigstens bereichsweise spiralartig gewundene Struktur des Heizleiters. Die Heizleiterabschnitte können bei einer derartigen spiralartig gewundenen Struktur des Heizleiter durch beispielsweise sich jeweils über einen Winkel von näherungsweise 360° erstreckende Windungsabschnitte bereitgestellt sein.

Da die einzelnen Heizleiterabschnitte des Heizleiters im Wesentlichen in Richtung einer Heizleiterabschnitt-Längsrichtung langgestreckt sind, ist für eine große Querschnittsfläche einer jeweiligen Durchströmöffnung vorgesehen, dass wenigstens eine Durchströmöffnung, vorzugsweise ein Teil der Durchströmöffnungen oder jede Durchströmöffnung, in einer Durchströmöffnung-Längsrichtung D, welche im Wesentlichen auch der lokal, also im Bereich einer jeweiligen Durchströmöffnung vorhandenen Heizleiterabschnitt-Längsrichtung entspricht, langgestreckt ist.

Für eine weitere Beeinflussung der Strömungsführung bei gleichzeitig großer Wärmeübertragungsfläche kann in Zuordnung zu wenigstens einer derartigen langgestreckten Durchströmöffnung, vorzugsweise einem Teil dieser langgestreckten Durchströmöffnungen oder jeder langgestreckten Durchströmöffnung, am Heizleiter ein Strömungsleitelement vorgesehen sein.

Hierzu kann bei wenigstens einer langgestreckten Durchströmöffnung, vorzugsweise einem Teil der langgestreckten Durchströmöffnungen oder jeder langgestreckten Durchströmöffnung, das zugeordnete Strömungsleitelement ausgehend von einem Längsendbereich der Durchströmöffnung sich in einer Durchströmöffnung-Längsrichtung wenigstens bereichsweise über die Durchströmöffnung hinweg erstrecken.

Für eine besonders einfach und kostengünstig herzustellende, im Betrieb zuverlässig wirkende Struktur ist der Heizleiter im Wesentlichen plattenartig ausgebildet oder/und durch Heraustrennen aus einem Metall-Flachmaterial, beispielsweise Metall-Flachmaterial mit den Werkstoffnummern 2.4869, 1.4765 oder 1.4725, bereitgestellt sein.

Zur Strömungsbeeinflussung und zur Freigabe einer jeweiligen Durchströmöffnung zur Durchströmung mit Abgas kann bei wenigstens einer langgestreckten Durchströmöffnung, vorzugsweise einem Teil der langgestreckten Durchströmöffnungen oder jeder langgestreckten Durchströmöffnung, das zugeordnete Strömungsleitelement wenigstens bereichsweise bezüglich des Heizleiters versetzt sein.

Die Erfindung betrifft ferner ein Verfahren zur Herstellung eines erfindungsgemäßen Heizleiters für eine Abgasheizanordnung für eine Abgasanlage für eine Brennkraftmaschine, umfassend die Verfahrensschritte gemäß Anspruch 6, nicht abschließend enthaltend die Maßnahmen:
a) Bereitstellen eines Metall-Flachmaterial-Rohlings,
b) Heraustrennen wenigstens eines Heizleiters aus dem Metall-Flachmaterial-Rohling mit einer Mehrzahl von Heizleiterabschnitten,
c) Bereitstellen der wenigstens einen langgestreckten Durchströmöffnung, vorzugsweise einer Mehrzahl von langgestreckten Durchströmöffnungen, in wenigstens einem Heizleiterabschnitt wenigstens eines Heizleiters.

Dabei kann in besonders einfacher Weise bei der Maßnahme b) wenigstens ein, vorzugsweise jeder Heizleiter durch Ausstanzen oder Ausschneiden, beispielsweise Laserstrahlschneiden oder Wasserstrahlschneiden, aus dem Metall-Flachmaterial-Rohling herausgetrennt werden.

Für eine schnelle, gleichwohl präzise Durchführung des erfindungsgemäßen Verfahrens kann in Zuordnung zu wenigstens einem Heizleiter, vorzugsweise jedem Heizleiter, zum Bereitstellen wenigstens einer Durchströmöffnung, vorzugsweise eines Teils der Durchströmöffnungen oder aller Durchströmöffnungen, die Maßnahme c) bei Durchführung der Maßnahme b) durchgeführt werden. Dabei kann beispielsweise dann, wenn ein bzw. mehrere Heizleiter durch Ausstanzen aus dem Metall-Flachmaterial-Rohling erzeugt werden, auch die Maßnahme zur Erzeugung einer bzw. mehrerer Durchströmöffnungen durch Ausstanzen durchgeführt werden. Werden bei gleichzeitiger Durchführung der Maßnahmen b) und c) die Heizleiter durch Ausschneiden erzeugt, können mit der gleichen Bearbeitungsmaßnahme auch eine oder mehrere Durchströmöffnungen erzeugt werden.

Insbesondere dann, wenn bei der Maßnahme b) ein Heizleiter mit sehr fein strukturierten Heizleiterabschnitten bereitzustellen ist oder/und bei der Maßnahme c) eine oder mehrere Durchströmöffnungen mit sehr feiner Struktur in jeweiligen Heizleiterabschnitten bereitzustellen ist bzw. sind, kann in Zuordnung zu wenigstens einem Heizleiter, vorzugsweise jedem Heizleiter, zum Bereitstellen wenigstens einer Durchströmöffnung, vorzugsweise eines Teils der Durchströmöffnungen oder aller Durchströmöffnungen, die Maßnahme c) vor Durchführung der Maßnahme b) durchgeführt werden. Derartige Durchströmöffnungen werden daher in dem vergleichsweise stabilen Metall-Flachmaterial-Rohling erzeugt, bevor der bzw. die Heizleiter aus dem Metall-Flachmaterial-Rohling mit den dann schon vorhandenen Durchströmöffnungen herausgetrennt werden. Diese Vorgehensweise ist auch daher besonders vorteilhaft, da nach dem Heraustrennen der Heizleiter aus dem Metall-Flachmaterial-Rohling im Wesentlichen keine weiteren Bearbeitungsschritte zum Erzeugen von Durchströmöffnungen an den vereinzelten Heizleitern durchgeführt werden müssen.

Bei einer weiteren Vorgehensweise kann in Zuordnung zu wenigstens einem Heizleiter, vorzugsweise jedem Heizleiter, zum Bereitstellen wenigstens einer Durchströmöffnung, vorzugsweise mehrerer oder aller Durchströmöffnungen, die Maßnahme c) nach Durchführung der Maßnahme b) durchgeführt werden.

Insbesondere dann, wenn die Maßnahmen b) und c) nicht gleichzeitig durchgeführt werden, können in Zuordnung zu wenigstens einem Heizleiter, vorzugsweise jedem Heizleiter, zum Bereitstellen wenigstens einer Durchströmöffnung, vorzugsweise eines Teils der Durchströmöffnungen oder jeder Durchströmöffnung, die Maßnahmen b) und c) mit zueinander unterschiedlichen Bearbeitungsmaßnahmen durchgeführt werden. Dies gestattet es, für jede dieser Maßnahmen eine dafür optimale Bearbeitungsmaßnahme heranzuziehen.

In Zuordnung zu wenigstens einem Heizleiter, vorzugsweise jedem Heizleiter, wird bei der Maßnahme c) in Zuordnung zu wenigstens einer langgestreckten Durchströmöffnung, vorzugsweise einem Teil der langgestreckten Durchströmöffnungen oder allen langgestreckten Durchströmöffnungen, ein Strömungsleitelement gebildet.

Die Erfindung betrifft ferner eine Abgasheizanordnung für eine Abgasanlage für eine Brennkraftmaschine, umfassend eine Trägeranordnung und wenigstens einen, vorzugsweise eine Mehrzahl von in einer Abgas-Hauptströmungsrichtung aufeinander folgenden, durch eine Trägeranordnung an einem Abgasführungsgehäuse getragenen, erfindungsgemäß aufgebauten Heizleitern, vorzugsweise hergestellt mit einem erfindungsgemäßen Verfahren.

Ferner betrifft die Erfindung eine Abgasanlage für eine Brennkraftmaschine, umfassend wenigstens eine erfindungsgemäß aufgebaute Abgasheizanordnung.

Die Offenbarung wird nachfolgend mit Bezug auf die beiliegenden Figuren detailliert beschrieben. Es zeigt:
- Fig. 1: eine perspektivische Ansicht eines Abgasheizers in einem Abgasführungsgehäuse;
- Fig. 2: eine Teil-Längsschnittansicht des in das Abgasführungsgehäuse eingesetzten Abgasheizers;
- Fig. 3: einen Heizleiter einer Heizleiteranordnung des Abgasheizers der Fig. 1;
- Fig. 4: einen Teil eines Heizleiters mit aneinander anschließenden und langgestreckte Durchströmöffnungen aufweisenden Heizleiterabschnitten;
- Fig. 5: einen Teil eines weiteren erfindungsgemäß aufgebauten Heizleiters;
- Fig. 6: eine Seitenansicht des Heizleiter ist der Fig. 5 in Blickrichtung VI in Fig. 5;
- Fig.7: einen Metall-Flachmaterial-Rohling mit daraus herauszutrennenden Heizleitern.

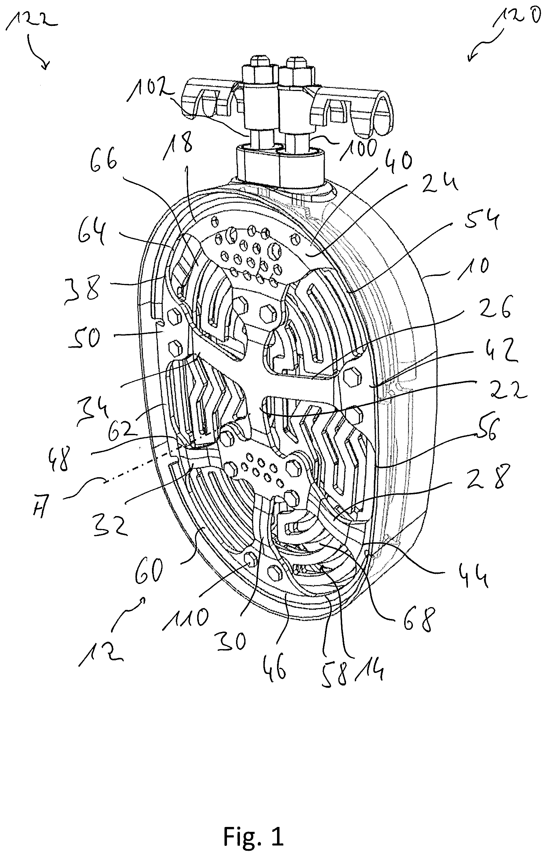

Die Fig. 1 bis 3 zeigen eine Ausgestaltungsart einer Abgasheizanordnung 120 in einer eine Abgasanlage 122 einer Brennkraftmaschine mit einem in ein beispielsweise rohrartiges und zumindest abschnittsweise in Richtung einer Abgasheizer-Mittenachse A langgestrecktes Abgasführungsgehäuse 10 eingesetzten Abgasheizer 12. Der Abgasheizer 12 umfasst eine allgemein mit 14 bezeichnete Heizleiteranordnung, die durch eine Trägeranordnung 16 am Abgasführungsgehäuse 10 getragen ist.

Die Trägeranordnung 16 umfasst zwei scheibenartige und beispielsweise aus Blechmaterial geformte, zueinander baugleiche Trägerelemente 18, 20. Die Trägerelemente 18, 20 sind mit einem im Wesentlichen quer zur Abgasheizer-Mittenachse A sich erstreckenden Zentralbereich 22 und einer Mehrzahl von von dem Zentralbereich 22 sich in Richtung nach radial außen erstreckenden Trägerarmen 24, 26, 28, 30, 32, 34 aufgebaut. In einem Außenumfangsbereich der Trägerelemente 18, 20 ist ein allgemein mit 38 bezeichneter Befestigungsbereich gebildet, mit welchem die Trägerelemente 18, 20 und somit der gesamte Abgasheizer 12 an der Innenoberfläche des Abgasführungsgehäuses 10 beispielsweise durch Verschweißung festgelegt werden kann. In diesem Befestigungsbereich 38 sind die beiden Trägerelemente 18, 20 in axialer Richtung abgekrümmt.

Im Bereich von jedem der Trägerarme 24, 26, 28, 30, 32, 34 umfasst der Befestigungsbereich 38 einen jeweiligen Befestigungsabschnitt 40, 42, 44, 46, 48, 50. Zwischen zwei jeweils einen radial äußeren Endbereich eines Trägerarms 24, 26, 28, 30, 32, 34 bildenden Befestigungsabschnitten 40, 42, 44, 46, 48, 50 ist jeweils ein die Befestigungsabschnitte zweier benachbarter Trägerarme verbindender Befestigungsrand 54, 56, 58, 60, 62, 64 gebildet, so dass die Befestigungsabschnitte 40, 42, 44, 46, 48, 50 mit den dazwischen sich erstreckenden und benachbarte Trägerarme 24, 26, 28, 30, 32, 34 miteinander verbindenden Befestigungsrändern 54, 56, 58, 60, 62, 64 eine in Umfangsrichtung im Wesentlichen durchlaufende Struktur des Befestigungsbereichs 38 bereitstellen.

Durch die Gestalt der Trägerarme 24, 26, 28, 30, 32, 34 und auch des Befestigungsbereichs 38 wird eine gezielte Strömungsführung für das den Abgasheizer 12 durchströmende Abgas erreicht. Insbesondere können durch die Trägerarme 24, 26, 28, 30, 32, 34 Bereiche abgedeckt werden, die gegen eine direkte Anströmung geschützt werden sollen. Dies können beispielsweise Bereiche sein, in welchen Sensoren beispielsweise zur Temperaturerfassung oder zur Erfassung der Abgaszusammensetzung angeordnet sind. Durch den im Wesentlichen ringartig durchlaufenden Befestigungsbereich 38 wird eine Strömung im radial äußeren Bereich unmittelbar entlang einer vergleichsweise kalten Innenoberfläche eines den Abgasheizer 12 enthaltenden Abgasführungsgehäuses 10 verhindert.

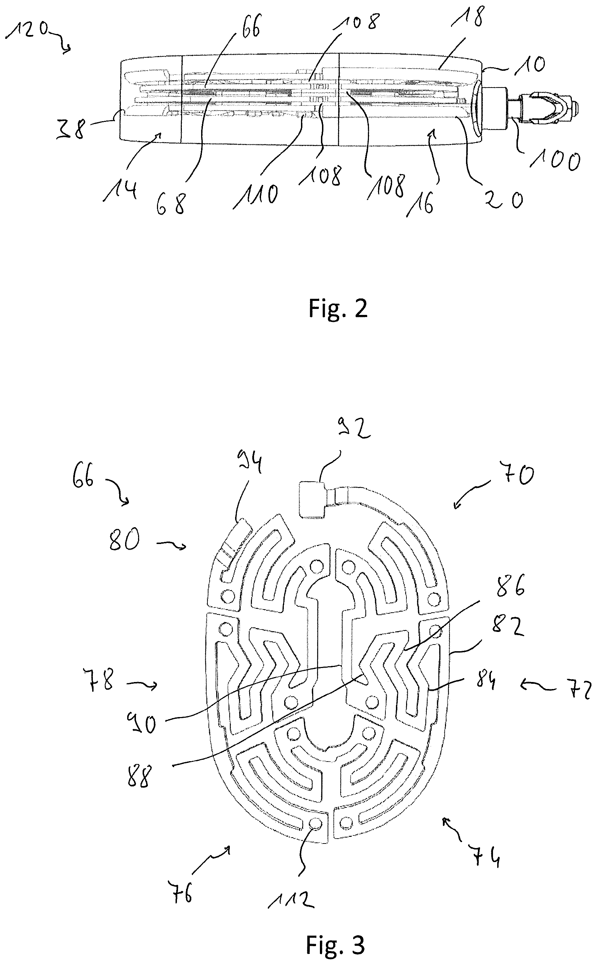

Die Fig. 3 zeigt einen stromaufwärtigen ersten Heizleiter 66 von zwei in Strömungsrichtung aufeinanderfolgenden Heizleitern 66, 68 der Heizleiteranordnung 14. Jeder der beiden grundsätzlich nicht mit elektrisch isolierendem Material ummantelten Heizleiter 66, 68 ist durch Heraustrennen, beispielsweise Ausstanzen oder Ausschneiden, wie zum Beispiel Laserschneiden oder Wasserstrahlschneiden, aus einem Metall-Flachmaterial-Rohling bereitgestellt und weist eine Außenumfangskontur auf, welche an die Innenumfangskontur des Abgasführungsgehäuses 10 angepasst ist und im dargestellten Ausgestaltungsbeispiel abgeflacht rund ist. Jeder der beiden Heizleiter 66, 68 ist mit einer Mehrzahl von in Umfangsrichtung aufeinander folgenden Mäander-Windungsfeldern 70, 72, 74, 76, 78, 80 aufgebaut, wobei in jedem der Mäander-Windungsfelder 70, 72, 74, 76, 78, 80 zueinander im Wesentlichen radial gestaffelte Heizleiterabschnitte 82, 84, 86, 88, 90 bereitstellende Mäander-Windungsabschnitte vorgesehen sind, welche näherungsweise in Umfangsrichtung sich erstreckend ausgebildet sind. In einem ihrer Umfangsendbereiche sind die Mäander-Windungsabschnitte bzw. Heizleiterabschnitte 84, 86, 88, 90 jeweils mit einem weiter radial außen positionierten Mäander-Windungsabschnitt bzw. Heizleiterabschnitt 82, 84, 86, 88 verbunden. In ihrem anderen Umfangsendbereich sind die Mäander-Windungsabschnitte bzw. Heizleiterabschnitte 82, 84, 86, 88 jeweils mit einem weiter radial innen liegenden Mäander-Windungsabschnitt bzw. Heizleiterabschnitt 84, 86, 88, 90 verbunden. Die jeweiligen radial äußeren Mäander-Windungsabschnitte bzw. Heizleiterabschnitte 82 der Mäander-Windungsfelder 72, 74, 76, 78 verbinden einander unmittelbar benachbarte Mäander-Windungsfelder miteinander. Gleichermaßen verbinden die radial inneren Mäander-Windungsabschnitte bzw. Heizleiterabschnitte 90 der Mäander-Windungsfelder 70, 72, 74, 76, 78, 80 einander unmittelbar benachbarte Mäander-Windungsfelder, so dass insgesamt eine serielle elektrische Schaltung der Mäander-Windungsfelder 70, 72, 74, 76, 78, 80 erhalten wird.

Obgleich das Erzeugen derartiger Heizleiter 66, 68 durch Heraustrennen aus einem Flachmaterial in besonders einfacher und ökonomisch durchführbarer Art und Weise die Möglichkeit gibt, die Heizleiter 66, 68 mit vergleichsweise komplexer Struktur der Mäander-Windungsabschnitte bzw. Heizleiterabschnitte derselben bereitzustellen, sind grundsätzlich auch andere nicht erfindungsgemäße Herstellungsverfahren, wie zum Beispiel Metallspritzguss oder Sintern, zum Erhalt derartiger Heizleiter 66,68 möglich.

Die radial äußeren Mäander-Windungsabschnitte bzw. Heizleiterabschnitte 82 der Mäander-Windungsfelder 70, 80 des ersten Heizleiters 66 stellen einen ersten Anschlussbereich 92 bzw. einen zweiten Anschlussbereich 94 des stromaufwärtigen ersten Heizleiters 66 bereit. Gleichermaßen stellen die radial äußeren Mäander-Windungsabschnitte bzw. Heizleiterabschnitte der gleichen Mäander-Windungsfelder des zweiten Heizleiters 68 einen ersten Anschlussbereich und einen zweiten Anschlussbereich des zweiten Heizleiters 68 bereit. Mit ihren ersten Anschlussbereichen stellen die Heizleiter 66, 68 jeweils einen Spannungsquellen-Anschlussbereich bereit, mit welchem die Heizleiter beispielsweise über das Abgasführungsgehäuse 10 elektrisch isoliert und gasdicht durchsetzende Anschlusselemente 100, 102 an eine Spannungsquelle angeschlossen werden können. Mit ihren zweiten Anschlussbereichen stellen die beiden Heizleiter 66, 68 Verbindungs-Anschlussbereiche bereit, in welchen die beiden Heizleiter 66, 68 beispielsweise durch einen Nietbolzen oder Verschweißen oder dergleichen, miteinander elektrisch leitend verbunden sind, so dass sich in diesem Ausgestaltungsbeispiel eine elektrisch serielle Schaltung der beiden Heizleiter ergibt. Im Bereich der Anschlussbereiche weisen die Heizleiter 66, 68 bzw. die jeweiligen radial außen liegenden Mäander-Windungsabschnitte bzw. Heizleiterabschnitte 82 eine vergleichsweise große Breite auf, um aufgrund des lokal geringeren elektrischen Widerstands in diesen gegen die Anströmung mit Abgas abgeschirmten Bereichen das Entstehen von Wärme im Vergleich zu den frei anströmbaren Bereichen mindern.

Bei einer alternativen Ausgestaltung können bei jedem der Heizleiter 66, 68 auch die zweiten Anschlussbereiche Spannungsquellen-Anschlussbereiche bereitstellen, so dass beispielsweise die beiden ersten Anschlussbereiche der beiden Heizleiter 66, 68 mit dem Anschlusselement 100 und über dieses mit einer Spannungsquelle verbunden werden können, während die zweiten Anschlussbereiche der beiden Heizleiter 66, 68 miteinander und über das Anschlusselement 102 mit der Spannungsquelle verbunden sein können, so dass sich eine elektrisch parallele Schaltung der Heizleiter 66, 68 ergibt. Insbesondere bei Auswahl einer Parallelschaltung der beiden Heizleiter 66, 68 wird eine Selbstregulierung der Heizleiter 66, 68 erhalten, wenn diese unterschiedlichen Abgastemperaturen ausgesetzt sind und dadurch lokal unterschiedliche elektrische Widerstände der Heizleiter 66, 68 auftreten.

Durch die in Richtung der Abgasheizer-Mittenachse A und somit auch einer Abgas-Hauptströmungsrichtung hintereinander liegenden Heizleiter 66, 68 wird bei axial kompakter Baugröße eine vergleichsweise große Oberfläche zur thermischen Wechselwirkung mit dem zu erwärmenden Abgas erreicht. Um dabei dafür zu sorgen, dass der weiter stromabwärts positionierte zweite Heizleiter 68 nicht vollständig im Strömungsschatten des weiter stromaufwärts positionierten ersten Heizleiters 66 positioniert ist, weisen die beiden Heizleiter 66, 68 zueinander nicht identische Strukturen bzw. Verläufe der einzelnen Mäander-Windungsabschnitte bzw. Heizleiterabschnitte 82, 84, 86, 88 auf. In den einzelnen Mäander-Windungsfeldern 70, 72, 74, 76, 78, 80 liegen insbesondere die Mäander-Windungsabschnitte bzw. Heizleiterabschnitte 84, 86, 88 der beiden Heizleiter 66, 68 nicht vollständig deckungsgleich zueinander, sondern sind radial zueinander versetzt sind, so dass der weiter stromabwärts positionierte zweite Heizleiter 68 zumindest bereichsweise quer zur Abgas-Hauptströmungsrichtung H über den weiter stromaufwärts positionierten ersten Heizleiter 66 hervorsteht. Somit besteht nahezu kein Querschnittsbereich, der nicht durch einen der beiden Heizleiter 66, 68 abgedeckt ist, so dass auch unter Berücksichtigung der beim Durchströmen der beiden Heizleiter 66, 68 auftretenden Verwirbelungen bzw. Turbulenzen eine sehr effiziente und gleichmäßige Erwärmung des Abgasstroms erreicht wird. Die radial äußeren Mäander-Windungsabschnitte bzw. Heizleiterabschnitte, welche vom Befestigungsbereich 38 radial bereichsweise umgriffen sind, können zueinander im Wesentlichen deckungsgleich sein. Auch die radial inneren Mäander-Windungsabschnitte der beiden Heizleiter 66, 68 können zueinander deckungsgleich liegen.

Zur festen Anbindung an die Trägeranordnung 16 bzw. die Trägerelemente 18, 20 derselben kann in mehreren Befestigungsbereichen 106 ein fester Verbund durch die Trägerelemente 18, 20 und zwischen diesen und den Heizleitern 66, 68 sowie auch zwischen den Heizleitern 66, 68 positionierte Isolierelemente 108 durchsetzende Befestigungsbolzen 110 erreicht werden.

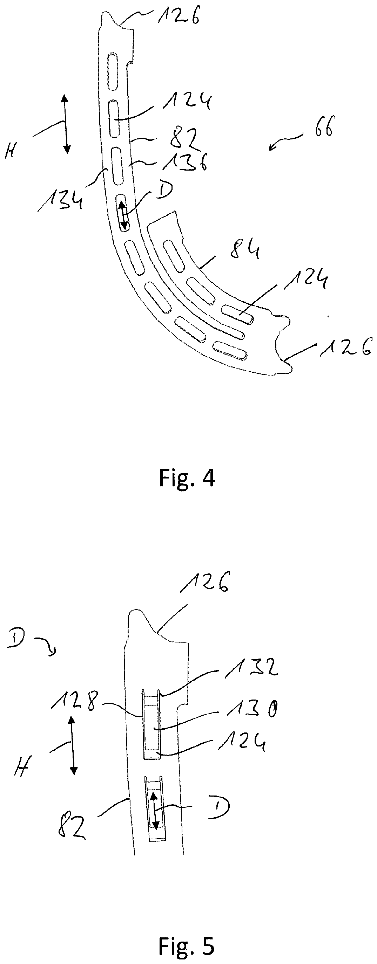

Es ist darauf hinzuweisen, dass vorangehend mit Bezug auf die Fig. 1-3 der grundsätzliche Aufbau einer Abgasheizanordnung 120 beschrieben wurde, in welchem ein oder mehrere Heizleiter mit dem nachfolgend mit Bezug auf die Fig. 4-6 beschriebenen Aufbau eingesetzt werden können. Die Gesamtstruktur einer derartigen Abgasheizanordnung kann in verschiedensten Ausgestaltungsaspekten von dem vorangehend mit Bezug auf die Fig. 1-3 beschriebenen Aufbau abzuweichen. Beispielsweise kann nur ein einziger Heizleiter durch die Trägeranordnung am Abgasführungsgehäuse getragen sein, oder es können mehr als zwei beispielsweise zueinander unterschiedlich gestaltete Heizleiter am bzw. im Abgasführungsgehäuse getragen sein. Auch können die eine allgemein gewundene Struktur eines jeweiligen Heizleiters bereitstellenden Heizleiterabschnitte eine von der vorangehend detailliert beschriebenen, beispielsweise mäanderartigen Struktur mit mehreren Mäander-Windungsfeldern abweichende Struktur aufweisen. So können beispielsweise mehrere Heizleiterabschnitte als jeweilige Mäander-Windungsabschnitte im Wesentlichen geradlinig sich erstreckend und parallel nebeneinander verlaufend angeordnet sein und auf diese Art und Weise den gesamten Strömungsquerschnitt erfassen. Ferner können Heizleiterabschnitte durch einander windungsartig umgebenden Windungsabschnitte einer Spiralstruktur bereitgestellt sein.

Die Fig. 4 zeigt einen Teil eines Heizleiters, beispielsweise des vorangehend beschriebenen Heizleiters 66 der Abgasheizanordnung 120. Es ist darauf hinzuweisen, das dass in gleicher oder ähnlicher Art und Weise auch der Heizleiter 68 oder ein möglicherweise einziger Heizleiter einer derartigen Abgasheizanordnung ausgebildet sein könnte.

Man erkennt in Fig. 4 in den beiden hier teilweise bzw. abschnittsweise dargestellten Heizleiterabschnitten 82, 84, welche gleichermaßen Mäander-Windungsabschnitte des Heizleiters 66 bilden können, dass in diesen Heizleiterabschnitten 82, 84 eine Mehrzahl von in einer Heizleiterabschnitt-Längsrichtung H aufeinanderfolgend angeordneten Durchströmöffnungen 124 vorgesehen ist. Jede der Durchströmöffnungen 124 ist in einer Durchströmöffnung-Längsrichtung D, welche im Wesentlichen auch der lokal jeweils vorhandenen Heizleiterabschnitt-Längsrichtung H entspricht, langgestreckt.

Durch das Vorsehen derartiger Durchströmöffnungen 124 werden verschiedene Vorteile erzielt. Zum einen wird die durch einen derartigen Heizleiter eingeführte Verdämmung in einer Abgasanlage begrenzt bzw. im Vergleich zu einem Aufbau ohne derartige Durchströmöffnungen reduziert. Zum Anderen wird durch die die Durchströmöffnungen 124 umgrenzenden Oberflächenbereiche des Aufbaumaterials eines jeweiligen Heizleiterabschnitts eine vergrößerte Oberfläche bereitgestellt, in welcher Wärme auf das einen derartigen Heizleiter 66 umströmende Abgas übertragen werden kann. Im Verhältnis zu der Oberfläche, welche durch das Bilden der Durchströmöffnungen 124 an der Vorderseite bzw. der Rückseite eines jeweiligen Heizleiters 82, 84 verloren geht, ist diese zusätzlich gewonnene Wärmeübertragungsfläche um so größer, je kleiner die Öffnungsquerschnittsfläche im Verhältnis zur Dicke des Aufbaumaterials des Heizleiters 66 ist.

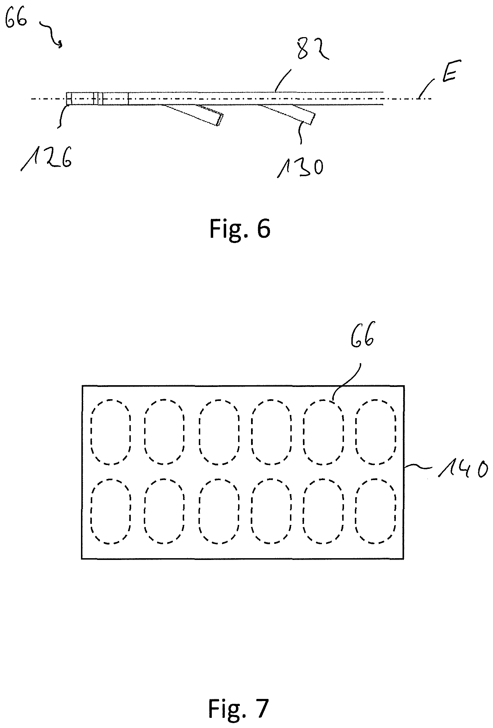

Die Durchströmöffnungen 124 können beispielsweise erzeugt werden, wenn der Heizleiter 66 beispielsweise durch Ausstanzen aus einem in Fig. 7 dargestellten Metall-Flachmaterial-Rohling 140 hergestellt wird. Es kann also ein Stanzwerkzeug eingesetzt werden, welches nicht nur die Kontur des Heizleiters 66 stanzt, sondern auch die Öffnungen 124 generiert. Auch bei Heraustrennen des Heizleiters 66 durch Schneiden, beispielsweise Laserstrahlschneiden oder Wasserstrahlschneiden, können gleichzeitig mit dem Heraustrennen des Heizleiters 66 aus dem Metall-Flachmaterial-Rohling die Öffnungen 124 gebildet werden.

Insbesondere dann, wenn die Öffnungen 124 eine besonders filigrane Struktur haben bzw. die beidseits derselben verbleibenden Stege 134, 136 in einem jeweiligen Heizleiterabschnitt 82, 84 vergleichsweise schmal sind, kann es vorteilhaft sein, den Vorgang des Heraustrennens des Heizleiters 66 an sich und den Vorgang des Erzeugens der Durchströmöffnungen 124 voneinander zu trennen. Beispielsweise kann auf dem plattenartigen Metall-Flachmaterial-Rohling 140 zunächst dort, wo später jeweilige Heizleiter bzw. Heizleiterabschnitte zu erzeugen sind, in einem Bearbeitungsvorgang eine Durchströmöffnung 124 bzw. mehrere Durchströmöffnungen 124 erzeugt werden, und zwar mit einer Bearbeitungsmaßnahme, die unter Berücksichtigung der zu erzeugenden Struktur einer jeweiligen Durchströmöffnung 124 besonders geeignet ist. Beispielsweise kann dieses Heraustrennen durch Laserstrahlschneiden oder dergleichen erfolgen. Sind die Durchströmöffnungen 124 erzeugt worden, können nachfolgend dann in einem weiteren Bearbeitungsvorgang der bzw. die Heizleiter 66 aus dem Metall-Flachmaterial-Rohling 140 herausgetrennt werden, beispielsweise durch eine andere Bearbeitungsmaßnahme, z. B. Ausstanzen. Es sind dann keine Nachbearbeitungsvorgänge mehr erforderlich. Selbstverständlich könnte dieser weitere Bearbeitungsvorgang unter Verwendung der gleichen Bearbeitungsmaßnahme, also beispielsweise auch durch Laserstrahlschneiden, durchgeführt werden.

Alternativ könnte vorgesehen sein, dass zunächst aus dem Metall-Flachmaterial-Rohling 140 einzelne Heizleiter 66 herausgetrennt werden, um dann in einem nachfolgenden Bearbeitungsvorgang eine oder mehrere Durchströmöffnungen 124 in verschiedenen Heizleiterabschnitten eines mit seiner Grundstruktur bereits aus dem Rohling herausgetrennten Heizleiters 66 zu erzeugen. Auch hier können für die verschiedenen Bearbeitungsvorgänge dafür jeweils besonders geeignete Bearbeitungsmaßnahmen herangezogen werden, welche sich voneinander unterscheiden können, jedoch grundsätzlich auch zueinander gleich sein können. Grundsätzlich ist es unter Berücksichtigung der Struktur der einzelnen Heizleiterabschnitte bzw. der zu erzeugenden Durchströmöffnungen auch möglich, einen Teil der Durchströmöffnungen vor dem Heraustrennen der Heizleiter aus dem Rohling zu erzeugen, und einen weiteren Teil der Durchströmöffnungen nach dem Heraustrennen zu erzeugen und für diese Bearbeitungsvorgänge jeweils die optimalen Bearbeitungsmaßnahmen einzusetzen, die sich voneinander unterscheiden können, grundsätzlich aber auch gleich sein können.

Es ist darauf hinzuweisen, dass bei dem in Fig. 4 abschnittsweise dargestellten Heizleiter 66 an den Endbereichen des Heizleiterabschnitts 82 bzw. des Heizleiterabschnitts 84 Befestigungsstrukturen 126 bereitgestellt sind, in deren Bereich unter Verwendung der in Fig. 2 dargestellten Isolierelemente 108 und der Befestigungsbolzen 110 der Heizleiter 66 bzw. mehrere derartige Heizleiter aufeinanderfolgend an den Trägerelementen 18, 20 festgelegt werden können. Diese Strukturen 126 ersetzen die in Fig. 3 erkennbaren und dem gleichen Zweck dienenden Öffnungen 110 in den verschiedenen Befestigungsbereichen 106 zugeordneten Bereichen des dargestellten Heizleiters 66.

Ein erfindungsgemäßer Heizleiter 66 ist in Fig. 5 dargestellt. Man erkennt hier, dass die im Heizleiterabschnitt 82 erkennbaren Durchströmöffnungen 124 beispielsweise dadurch gebildet werden, dass ein im Wesentlichen U-förmiger Einschnitt 128 gebildet wird. Durch das Bilden eines derartigen U-förmigen Einschnittes 128 entsteht ein in der Heizleiterabschnitt-Längsrichtung H bzw. einer jeweiligen Durchströmöffnung-Längsrichtung D langgestrecktes, als integraler Bestandteil an den Heizleiter 66 bzw. den Heizleiterabschnitt 82 angebundenes, zungenartiges Strömungsleitelement 130. Dieses kann aus der in Fig. 6 erkennbaren und durch den Heizleiter 66 aufgespannten Ebene E beispielsweise in Richtung stromabwärts herausgebogen werden, so dass durch ein derartiges zum Heizleiter selbst bzw. zur Ebene E bereichsweise versetztes zungenartiges Strömungsleitelement 130 ein definierter Einfluss auf die Strömungsführung im Bereich eines derartigen Heizleiters 66 bereitgestellt werden kann.

Alternativ zu der in Fig. 5 erkennbaren Anbindung eines jeweiligen Strömungsleitelements an den Heizleiter 66 im Bereich eines jeweiligen Längsendbereichs 132 an der zugeordneten Durchströmöffnung 124, könnte die Anbindung auch entlang eines Längsrandes der zugeordneten Durchströmöffnung 124 erfolgen und ein jeweiliges Strömungsleitelement 130 durch Biegen um eine im Wesentlichen parallel zur Durchströmöffnung-Längsrichtung D sich erstreckende Biegelinie aus der Ebene E herausgebogen werden, so dass es bereichsweise zu dieser Ebene E bzw. zum Heizleiter 66 in Richtung der Abgasheizer-Mittenachse A versetzt bzw. zu dieser geneigt angeordnet ist.

Es ist darauf hinzuweisen, dass derartige Durchströmöffnungen 124 an dem Heizleiter 66 in allen, also auch den in den Fig. 4 bis 6 nicht dargestellten Heizleiterabschnitten beispielsweise mit gleicher Verteilung bzw. gleichem Abstand zueinander und aufeinanderfolgend angeordnet sein können. Alternativ kann, abhängig von den zu erreichenden Strömungsverhältnissen oder angepasst an die in einer Abgasanlage vorhandenen Strömungsverhältnisse, die Dichte der Durchströmöffnungen 124 in einzelnen Heizleiterabschnitten bzw. zwischen einzelnen Heizleiterabschnitten variieren. Es können auch Heizleiterabschnitte vorhanden sein, in welchen keine Durchströmöffnungen vorgesehen sind. Auch können Durchströmöffnungen 124 andere Querschnittsgeometrien, beispielsweise eine kreisartige Querschnittsgeometrie, aufweisen, und sie können beispielsweise bezüglich der Heizleiterabschnitt-Längsrichtung H angewinkelt positioniert sein.

Durch die in dem Heizleiter 66 vorgesehenen Durchströmöffnungen 124 wird nicht nur ein Einfluss auf die Abgasströmung genommen, sondern es wird auch der Stromfluss durch den Heizleiter 66 hindurch beeinflusst. Dieser teilt sich im Bereich der Durchströmöffnungen 124 auf die beiden eine jeweilige Durchströmöffnung 124 seitlich begrenzenden Stege 134, 136 auf. Abhängig von der Breite bzw. der Querschnittsfläche dieser Stege 134, 136 weisen diese ggf. gleiche oder sich unterscheidende elektrische Widerstände auf, so dass durch entsprechende Dimensionierung dieser Stege 134, 136 auch die darin aufgrund des jeweiligen elektrischen Widerstandes generierte Wärme und somit die in das Abgas übertragene Energie beeinflusst werden kann.

Es ist weiter darauf hinzuweisen, dass selbstverständlich derartige Durchströmöffnungen bei grundsätzlich anders strukturierten, im Wesentlichen plattenartig aufgebauten Heizleitern eingesetzt werden können. Beispielsweise könnte ein derartiger Heizleiter eine spiralartige Struktur aufweisen, wobei einzelne Heizleiterabschnitte beispielsweise durch jeweilige Windungsabschnitte der spiralartigen Struktur definiert sein können. Auch können bei mäanderartigem Verlauf der Heizleiterabschnitte diese jeweils im Wesentlichen geradlinig sich erstreckend und nebeneinanderliegend aufgebaut sein, wobei zur Anpassung der Außenumfangsstruktur eines so aufgebauten Heizleiters an die Querschnittsgeometrie eines jeweiligen Abgasführungsgehäuses die Länge dieser geradlinig sich erstreckenden Heizleiterabschnitte variieren kann.

## Patentansprüche

1. Heizleiter für eine Abgasheizanordnung für eine Abgasanlage für eine Brennkraftmaschine, wobei der Heizleiter (66) im Wesentlichen plattenartig ausgebildet ist und durch Heraustrennen aus einem Metall-Flachmaterial (140) bereitgestellt ist und eine Mehrzahl von in einer Heizleiterabschnitt-Längsrichtung (H) langgestreckten Heizleiterabschnitten 82, 84) umfasst,
wobei die Heizleiterabschnitte (82, 84) zum Bereitstellen einer windungsartig sich erstreckenden Struktur des Heizleiters (66) aneinander anschließend angeordnet sind, und wenigstens ein Teil der Heizleiterabschnitte (82, 84) eine wenigstens bereichsweise mäanderartig gewundene Struktur des Heizleiters (66) bildet oder/und wenigstens ein Teil der Heizleiterabschnitte eine wenigstens bereichsweise spiralartig gewundene Struktur des Heizleiters bildet,
**dadurch gekennzeichnet,**
**dass** in wenigstens einem Heizleiterabschnitt (82, 84) wenigstens eine von Abgas durchströmbare Durchströmöffnung (124) vorgesehen ist,
**dass** wenigstens eine Durchströmöffnung (124) in einer im Wesentlichen der im Bereich dieser Durchströmöffnung (124) vorhandenen Heizleiterabschnitt-Längsrichtung (H) entsprechenden Durchströmöffnung-Längsrichtung (D) langgestreckt ist, und
**dass** in Zuordnung zu wenigstens einer in der Durchströmöffnung-Längsrichtung (D) langgestreckten Durchströmöffnung (124) am Heizleiter (66) ein Strömungsleitelement (130) ausgehend von einem Längsendbereich (132) der Durchströmöffnung (124) sich in der Durchströmöffnung-Längsrichtung (D) wenigstens bereichsweise über die Durchströmöffnung (124) hinweg erstreckend vorgesehen ist.

2. Heizleiter nach Anspruch 1, **dadurch gekennzeichnet, dass** in mehreren oder jedem Heizleiterabschnitt (82, 84) wenigstens eine, vorzugsweise mehrere von Abgas durchströmbare Durchströmöffnungen (124) vorgesehen sind.

3. Heizleiter nach Anspruch 2, **dadurch gekennzeichnet, dass** ein Teil der Durchströmöffnungen (124) oder jede Durchströmöffnung (124) in der Durchströmöffnung-Längsrichtung (D) Heizleiterabschnitt-Längsrichtung (H) langgestreckt ist.

4. Heizleiter nach Anspruch 2 oder 3, **dadurch gekennzeichnet, dass** in Zuordnung zu einem Teil der in der Durchströmöffnung-Längsrichtung (D) langgestreckten Durchströmöffnungen (124) oder jeder in der Durchströmöffnung-Längsrichtung (D) langgestreckten Durchströmöffnung (124) am Heizleiter (66) ein Strömungsleitelement (130) vorgesehen ist.

5. Heizleiter nach Anspruch 4, **dadurch gekennzeichnet,**
**dass** bei einem Teil der in der Durchströmöffnung-Längsrichtung (D) langgestreckten Durchströmöffnungen (124) oder jeder in der Durchströmöffnung-Längsrichtung (D) langgestreckten Durchströmöffnung (124) das zugeordnete Strömungsleitelement (130) ausgehend von einem Längsendbereich (132) der Durchströmöffnung (124) sich in einer Durchströmöffnung-Längsrichtung (D) wenigstens bereichsweise über die Durchströmöffnung (124) hinweg erstreckt,
oder/und
**dass** bei wenigstens einer in der Durchströmöffnung-Längsrichtung (D) langgestreckten Durchströmöffnung (124), vorzugsweise einem Teil der in der Durchströmöffnung-Längsrichtung (D) langgestreckten Durchströmöffnungen (124) oder jeder in der Durchströmöffnung-Längsrichtung (D) langgestreckten Durchströmöffnung (124), das zugeordnete Strömungsleitelement (130) wenigstens bereichsweise bezüglich des Heizleiters (66) versetzt ist.

6. Verfahren zur Herstellung eines Heizleiters (66) für eine Abgasheizanordnung (120) für eine Abgasanlage (122) für eine Brennkraftmaschine gemäß Anspruch 1, umfassend die Maßnahmen:
a) Bereitstellen eines Metall-Flachmaterial-Rohlings (140),
b) Heraustrennen wenigstens eines Heizleiters (66) aus dem Metall-Flachmaterial-Rohling (140) mit einer Mehrzahl von Heizleiterabschnitten (82, 84),
c) Bereitstellen der wenigstens einen in der Durchströmöffnung-Längsrichtung (D) langgestreckten Durchströmöffnung (124), vorzugsweise einer Mehrzahl von in der Durchströmöffnung-Längsrichtung (D) langgestreckten Durchströmöffnungen (124), in wenigstens einem Heizleiterabschnitt (82, 84) wenigstens eines Heizleiters (66) vor Durchführung der Maßnahme b) oder bei Durchführung der Maßnahme b) oder nach Durchführung der Maßnahme b), wobei in Zuordnung zu wenigstens einem Heizleiter (66) bei der Maßnahme c) in Zuordnung zu wenigstens einer Durchströmöffnung (124) ein Strömungsleitelement (130) derart gebildet wird, dass das Strömungsleitelement (130) wenigstens bereichsweise bezüglich des Heizleiters (66) versetzt ist.

7. Verfahren nach Anspruch 6, **dadurch gekennzeichnet, dass** bei der Maßnahme b) wenigstens ein, vorzugsweise jeder Heizleiter (66) durch Ausstanzen oder Ausschneiden aus dem Metall-Flachmaterial-Rohling (140) herausgetrennt wird.

8. Verfahren nach Anspruch 6 oder 7, **dadurch gekennzeichnet, dass** in Zuordnung zu wenigstens einem Heizleiter (66), vorzugsweise jedem Heizleiter (66), zum Bereitstellen wenigstens einer Durchströmöffnung (124), vorzugsweise eines Teils der Durchströmöffnungen (124) oder jeder Durchströmöffnung (124), die Maßnahmen b) und c) mit zueinander unterschiedlichen Bearbeitungsmaßnahmen durchgeführt werden.

9. Verfahren nach einem der Ansprüche 6-8, **dadurch gekennzeichnet, dass** in Zuordnung zu jedem Heizleiter (66) bei der Maßnahme c) in Zuordnung zu wenigstens einer Durchströmöffnung (124), vorzugsweise einem Teil der Durchströmöffnungen (124) oder allen Durchströmöffnungen (124), ein Strömungsleitelement (130) gebildet wird.

10. Abgasheizanordnung für eine Abgasanlage für eine Brennkraftmaschine, umfassend eine Trägeranordnung (16) und wenigstens einen, vorzugsweise eine Mehrzahl von in einer Abgas-Hauptströmungsrichtung aufeinander folgenden, durch die Trägeranordnung (10) an einem Abgasführungsgehäuse (10) getragenen Heizleitern (66) nach einem der Ansprüche 1-5, vorzugsweise hergestellt mit einem Verfahren nach einem der Ansprüche 6-9.

11. Abgasanlage für eine Brennkraftmaschine, umfassend wenigstens eine Abgasheizanordnung (120) nach Anspruch 10.

## Claims

1. A heating conductor for an exhaust gas heating arrangement for an exhaust system for an internal combustion engine, wherein the heating conductor (66) is substantially plate-like and is provided by cutting out of a metal flat material (140) and comprises a plurality of heating conductor sections (82, 84) elongated in a heating conductor section longitudinal direction (H),
wherein the heating conductor sections (82, 84) are arranged succeeding one another for providing a winding-like extending structure of the heating conductor (66), and wherein at least some of the heating conductor sections (82, 84) form an at least in regions meander-like wound structure of the heating conductor (66) or/and at least some of the heating conductor sections forming an at least in regions spirally wound structure of the heating conductor,
**characterized in that** at least one through-flow opening (124) through which exhaust gas can flow is provided in at least one heat conductor section (82, 84),
**in that** at least one through-flow opening (124) is elongated in a through-flow opening longitudinal direction (D) corresponding substantially to the through-flow opening longitudinal direction (H) present in the region of this through-flow opening (124), and
**in that** a flow-conducting element (130) is provided on the heating conductor (66) in association with at least one throughflow opening (124) elongated in the throughflow opening longitudinal direction (D), starting from a longitudinal end region (132) of the throughflow opening (124) and extending in the throughflow opening longitudinal direction (D) at least in regions over the throughflow opening (124).

2. Heating conductor according to claim 1, **characterized in that** at least one, preferably several, through-flow openings (124) through which exhaust gas can flow are provided in several or each heating conductor section (82, 84).

3. Heating conductor according to claim 2, **characterized in that** a part of the through-flow openings (124) or each through-flow opening (124) is elongated in the through-flow opening longitudinal direction (D), heating conductor section longitudinal direction (H).

4. Heating conductor according to claim 2 or 3, **characterized in that** a flow-conducting element (130) is provided on the heating conductor (66) in association with a part of the throughflow openings (124) elongated in the throughflow opening longitudinal direction (D) or each throughflow opening (124) elongated in the throughflow opening longitudinal direction (D).

5. Heating conductor according to claim 4, **characterized in that**, in the case of part of the through-flow openings (124) elongated in the through-flow opening longitudinal direction (D) or each through-flow opening (124) elongated in the through-flow opening longitudinal direction (D), the associated flow-conducting element (130), starting from a longitudinal end region (132) of the through-flow opening (124), extends in a through-flow opening longitudinal direction (D) at least in regions over the through-flow opening (124), or/and
**in that**, in the case of at least one through-flow opening (124) which is elongate in the through-flow opening longitudinal direction (D), preferably a part of the through-flow openings (124) which are elongate in the through-flow opening longitudinal direction (D) or each through-flow opening (124) which is elongate in the through-flow opening longitudinal direction (D), the associated flow-conducting element (130) is offset at least in regions with respect to the heating conductor (66).

6. A method for manufacturing a heating conductor (66) for an exhaust gas heating arrangement (120) for an exhaust system (122) for an internal combustion engine according to claim 1, comprising the measures:
a) providing a metal flat blank (140),
b) separating at least one heat conductor (66) from said metal flat blank (140) having a plurality of heat conductor sections (82, 84),
c) providing the at least one through-flow opening (124) elongated in the through-flow opening longitudinal direction (D), preferably a plurality of through-flow openings (124) elongated in the through-flow opening longitudinal direction (D), in at least one heat conductor section (82, 84) of at least one heat conductor (66) before carrying out measure b) or when carrying out measure b) or after carrying out measure b), wherein in association with at least one heat conductor (66) in measure c) a flow-conducting element (130) is formed in association with at least one throughflow opening (124) in such a way that the flow-conducting element (130) is offset at least in regions with respect to the heat conductor (66).

7. The method according to claim 6, **characterized in that** in step b) at least one, preferably each, heat conductor (66) is cut out of the metal flat material blank (140) by punching or cutting.

8. Method according to claim 6 or 7, **characterized in that** in association with at least one heat conductor (66), preferably each heat conductor (66), for providing at least one flow opening (124), preferably a part of the flow openings (124) or each flow opening (124), measures b) and c) are carried out with mutually different processing measures.

9. Method according to one of claims 6-8, **characterized in that** a flow-conducting element (130) is formed in association with each heating conductor (66) in measure c) in association with at least one throughflow opening (124), preferably a part of the throughflow openings (124) or all throughflow openings (124).

10. Exhaust gas heating arrangement for an exhaust gas system for an internal combustion engine, comprising a carrier arrangement (16) and at least one, preferably a plurality of heating conductors (66), which follow one another in an exhaust gas main flow direction and are supported by the carrier arrangement (10) on an exhaust gas guide housing (10), according to one of the claims 1-5, preferably produced by a method according to one of the claims 6-9.

11. Exhaust system for an internal combustion engine comprising at least one exhaust gas heating arrangement (120) according to claim 10.

## Revendications

1. Conducteur de chaleur pour un dispositif de chauffage des gaz d'échappement pour un système d'échappement d'un moteur à combustion interne, dans lequel le conducteur de chaleur (66) est essentiellement adapté en forme de plaque et est fourni par découpage dans un matériau plat métallique (140) et comprend une pluralité de sections de conducteur de chaleur (82, 84) allongées dans une direction longitudinale de section de conducteur de chaleur (H),
dans lequel les sections de conducteur de chaleur (82, 84) sont disposées se succédant pour fournir une structure d'extension du conducteur de chaleur (66) en forme d'enroulement,
et dans lequel au moins une partie des sections de conducteur de chaleur (82, 84) forment une structure au moins partiellement en méandre du conducteur de chaleur (66) ou/et au moins une partie des sections de conducteur de chaleur forment une structure au moins partiellement en spirale,
**caractérisé en ce qu'**au moins une ouverture de passage (124) à travers laquelle les gaz d'échappement peuvent s'écouler est prévue dans au moins une section de conducteur de chaleur (82, 84),
**en ce qu'**au moins une ouverture de passage (124) est allongée dans une direction longitudinale d'ouverture de passage (D) correspondant essentiellement à la direction longitudinale d'ouverture de passage (H) présente dans la région de cette ouverture de passage (124), et
un élément conducteur de flux (130) est prévu sur le conducteur de chaleur (66) en association à au moins une ouverture de passage (124) allongée dans la direction longitudinale d'ouverture de passage (D), partant d'une région d'extrémité longitudinale (132) de l'ouverture de passage (124) et s'étendant dans la direction longitudinale d'ouverture de passage (D) au moins dans des régions au-dessus de l'ouverture de passage (124).

2. Conducteur de chaleur selon la revendication 1, **caractérisé en ce qu'**au moins une, de préférence plusieurs, ouvertures de passage (124) à travers lesquelles les gaz d'échappement peuvent s'écouler sont prévues dans plusieurs ou chaque section du conducteur de chaleur (82, 84).

3. Conducteur de chaleur selon la revendication 2, **caractérisé en ce qu'**une partie des ouvertures de passage (124) ou chaque ouverture de passage (124) est allongée dans la direction longitudinale d'ouverture de passage (D), la direction longitudinale de section de conducteur de chaleur (H).

4. Conducteur de chaleur selon la revendication 2 ou 3, **caractérisé en ce qu'**un élément conducteur de flux (130) est prévu sur le conducteur de chaleur (66) en association à une partie des ouvertures de passage (124) allongées dans la direction longitudinale d'ouverture de passage (D) ou chaque ouverture de passage (124) allongée dans la direction longitudinale d'ouverture de passage (D).

5. Conducteur de chaleur selon la revendication 4, **caractérisé en ce que**, dans une partie des ouvertures de passage (124) allongées dans la direction longitudinale d'ouverture de passage (D) ou dans chaque ouverture de passage (124) allongée dans la direction longitudinale d'ouverture de passage (D), l'élément conducteur de flux associé (130), partant d'une région d'extrémité longitudinale (132) de l'ouverture de passage (124), s'étend dans une direction longitudinale d'ouverture de passage (D) au moins dans des régions au-dessus de l'ouverture de passage (124), ou/et
**en ce que** dans au moins une ouverture de passage (124) allongée dans la direction longitudinale d'ouverture de passage (D), de préférence une partie des ouvertures de passage (124) allongées dans la direction longitudinale d'ouverture de passage (D) ou chaque ouverture de passage (124) allongée dans la direction longitudinale d'ouverture de passage (D), l'élément conducteur de flux associé (130) est décalé au moins dans des régions par rapport au conducteur de chaleur (66).

6. Procédé pour la production d'un conducteur de chaleur (66) pour un dispositif de chauffage des gaz d'échappement (120) pour un système d'échappement (122) d'un moteur à combustion interne selon la revendication 1, comprenant les mesures suivantes :
a) fournir une ébauche plate en métal (140),
b) découper au moins un conducteur de chaleur (66) de ladite ébauche plate en métal (140) ayant une pluralité de sections de conducteur de chaleur (82, 84),
c) fournir ladite au moins une ouverture de passage (124) allongée dans la direction longitudinale d'ouverture de passage (D), de préférence une pluralité d'ouvertures de passage (124) allongées dans la direction longitudinale d'ouverture de passage (D), dans au moins une section de conducteur de chaleur (82, 84) d'au moins un conducteur de chaleur (66) avant d'effectuer la mesure b) ou lors de l'exécution de la mesure b) ou après l'exécution de la mesure b), dans lequel, en association à au moins un conducteur de chaleur (66) dans la mesure c), un élément conducteur de flux (130) est formé en association avec au moins une ouverture de passage (124) de telle sorte que l'élément conducteur de flux (130) est décalé au moins dans des régions par rapport au conducteur de chaleur (66).

7. Procédé selon la revendication 6, **caractérisé en ce qu'**à l'étape b), au moins un, de préférence chaque, conducteur de chaleur (66) est découpé dans l'ébauche plate en métal (140) par poinçonnage ou découpage.

8. Procédé selon la revendication 6 ou 7, **caractérisé en ce qu'**en association avec au moins un conducteur de chaleur (66), de préférence chaque conducteur de chaleur (66), pour fournir au moins une ouverture d'écoulement (124), de préférence une partie des ouvertures d'écoulement (124) ou chaque ouverture d'écoulement (124), les mesures b) et c) sont exécutées avec des mesures de traitement différentes l'une de l'autre.

9. Procédé selon l'une des revendications 6 à 8, **caractérisé en ce qu'**un élément conducteur de flux (130) est formé en association à chaque conducteur de chaleur (66) dans la mesure c) en association avec au moins une ouverture de passage (124), de préférence une partie des ouvertures de passage (124) ou toutes les ouvertures de passage (124).

10. Dispositif de chauffage des gaz d'échappement pour un système de gaz d'échappement d'un moteur à combustion interne, comprenant un dispositif de support (16) et au moins un, de préférence une pluralité de conducteurs de chaleur (66), qui se suivent dans une direction d'écoulement principal des gaz d'échappement et sont supportés par le dispositif de support (10) sur un boîtier de guidage des gaz d'échappement (10), selon l'une des revendications 1-5, de préférence produit par un procédé selon l'une des revendications 6-9.

11. Système d'échappement pour un moteur à combustion interne comprenant au moins un dispositif de chauffage des gaz d'échappement (120) selon la revendication 10.
